(19) Europäisches Patentamt
European Patent Office
Office européen des brevets

(11) EP 4 219 610 A1

(12) EUROPEAN PATENT APPLICATION

(43) Date of publication:
**02.08.2023 Bulletin 2023/31**

(21) Application number: **22154332.5**

(22) Date of filing: **31.01.2022**

(51) International Patent Classification (IPC):
***C08K 3/36*** *(2006.01)* ***C08K 5/103*** *(2006.01)*
***C08L 21/00*** *(2006.01)* ***C08L 7/00*** *(2006.01)*
***C08L 9/06*** *(2006.01)*

(52) Cooperative Patent Classification (CPC):
**C08L 21/00; C08K 3/36; C08K 5/103; C08L 7/00; C08L 9/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bridgestone Europe NV/SA**
**1930 Zaventem (BE)**

(72) Inventors:
- **CHIEFFI, Gianpaolo**
  **00128 Roma (IT)**
- **Fresch, Enrico**
  **00128 Roma (IT)**

(74) Representative: **Marchetti, Alessio**
**Bridgestone Europe N.V./S.A. - Italian Branch**
**Technical Center**
**Via del Fosso del Salceto, 13/15**
**00128 Roma (IT)**

(54) **RUBBER COMPOSITION WITH HIGH STIFFNESS**

(57) The present invention relates to a rubber composition comprising a crosslinkable polymer base, a filler comprising silica and a vulcanization system, characterized in that it further comprises a compound having a dipole moment at least higher than 2 Debye, wherein the dipole moment is calculated by DFT simulation, and in that the compound comprises one or more polar functional groups and an hydrophobic carbon chain, wherein the polar functional groups are located only at one end of the carbon chain.

EP 4 219 610 A1

## Description

### FIELD OF THE INVENTION

The present invention is related to a silica filled rubber composition for tyres having high stiffness, the composition comprising a compound having a dipole moment at least higher than 2 Debye, one or more polar functional groups and an hydrophobic carbon chain, wherein the one or more polar functional groups are located only at one end of the hydrophobic carbon chain; to a tyre tread comprising said silica filled rubber composition and to a tyre comprising such tread.

### BACKGROUND OF THE INVENTION

In the tyre industry, manufacturers have expressed the need for rubber compositions which allow to produce tyre components exhibiting lower hysteresis and, therefore, lower rolling resistance. In this regard, those skilled in the art are implementing solutions that favor better dispersion of the filler within the rubber composition of which the tyre components is made, such as, the use of functionalized polymers or functionalized fillers, or the optimization of the mixing process of the rubber composition.

Despite the fact that such solutions are able to guarantee low levels of hysteresis, they have the disadvantage of reducing the stiffness of the rubber composition. As it is known to a person skilled in the art, rubber compositions with low stiffness imply low handling performance.

Solutions for increasing the stiffness of the composition typically increase the hysteresis and worsen the rolling resistance of the composition, which is not acceptable for current tyre industry standard.

In rubber compounding industry, "additives" are ingredients, such as processing aids, fillers, curing agents, etc. which are added to the rubber matrix in definite proportions to obtain a uniform mixture that will have the desirable physical and chemical properties to meet the needed performance requirements.

As it is known to a person skilled in the art, the addition of filler, for example silica, to tyre rubber compositions, in the absence of other specific additives results in an increase in stiffness and yet also the rolling resistance. The reason is that the dispersion of silica in a rubber composition, in the absence of other specific additives, is generally poor due to the immiscibility of the silica in the rubber matrix. A poor silica dispersion is directly related to an increase of the hysteresis of the composition and thus a worsening of the rolling resistance properties. For this reason plasticizers are added to silica-filled rubber compositions to decrease the viscosity of the composition thereby improving the dispersion of silica and the mixability of the composition.

Compounds having a polar functional group and a hydrophobic carbon chain can be used as plasticizers for silica filled rubber compositions. They are able to interact with silica by the presence of a polar functional group and, at the same time by the presence of the hydrophobic carbon chain allows the dispersion of the silica attracted to the polar functional group in the polymer matrix.

As such, the addition of plasticizer favors an optimal hysteresis level obtained by process means. However this improvement in the dispersion results in a worsening of the stiffness properties.

It is therefore required to find a solution that provides silica-filled rubber composition with increased stiffness yet keeping acceptable values of rolling resistance.

The inventors of the present invention have found that the polarity and the chemical structure of the plasticizers added in the silica-filled rubber compositions may provide the optimum balance between stiffness and hysteresis of the composition.

### SUMMARY OF THE INVENTION

In a first aspect the present invention relates to a rubber composition comprising a cross-linkable polymer base, a filler comprising silica and a vulcanization system, characterized in that it further comprises a compound having a dipole moment at least higher than 2 Debye, wherein the dipole moment is calculated by Density Functional Theory (DFT) simulation, and in that the compound comprises one or more polar functional groups and an hydrophobic carbon chain, wherein the polar functional groups are located only at one end of the carbon chain.

In a second aspect the present invention relates to a tyre tread comprising a rubber composition according to the first aspect.

In a third aspect the present invention relates to a tyre comprising a tread according to the second aspect.

Preferred features of the invention are the object of the dependent claims.

DETAILED DESCRIPTION

According to a first aspect, the invention relates to a rubber composition comprising a cross-linkable polymer base, a filler comprising silica and a vulcanization system, characterized in that it further comprises a compound having a dipole moment at least higher than 2 Debye, wherein the dipole moment is calculated by DFT simulation, and in that the compound comprises one or more polar functional groups and an hydrophobic carbon chain, wherein the polar functional groups are located only at one end of the carbon chain.

Herein and after, the term "cross-linkable polymer base" refers to any natural or synthetic non cross-linked elastomer capable of assuming all of the typical chemical-physical and mechanical characteristics of elastomers upon cross-linking (vulcanization) with sulfur-based systems.

Non-limiting examples of suitable elastomers for use in the cross-linkable polymer base include, but are not limited to, at least one of styrene-butadiene rubber (also referred to as SBR or styrene-butadiene copolymer), polybutadiene (also referred as BR), natural rubber (also referred as NR), ethylene propylene diene monomer rubber (also referred as EPDM rubber), butyl rubber (also referred as IIR), polyisobutylene rubber, epoxidized natural rubber (also referred as ENR), neoprene, synthetic polyisoprene (also referred as IR), polyurethane (also referred as PU).

The elastomers for use in the cross-linkable polymer base, may comprise a functionalized elastomer.

The term "functionalized elastomer" should be interpreted to include elastomers with a functional group at one or both ends of the chain or in the main chain of the elastomer, and any combinations thereof. For example, a silica-reactive functionalized elastomer may have the functional group at one or both ends of the chain, or in the main chain thereof, or both.

Non-limiting examples of silica-reactive functional groups that are known to be utilized in functionalizing elastomers and that are suitable for use in the cross-linkable polymer base include nitrogen-containing functional groups, silicon-containing functional groups, oxygen- or sulfur-containing functional groups, and metal-containing functional groups.

Preferably the elastomer for use in the cross-linkable polymer base is selected from polybutadiene (BR), styrene-butadiene copolymer (SBR), natural rubber (NR) or a mixture of the three. More preferably the elastomer for use in the cross-linkable polymer base is selected from styrene-butadiene copolymer (SBR), natural rubber (NR) or a mixture of the two. In particular the cross-linkable polymer base may be a mixture comprising from 50 to 100 phr of SBR and from 0 to 50 phr of NR, more preferably from 60 to 90 phr of SBR and from 10 to 40 phr of NR, more preferably from 65 to 85 phr of SBR and from 15 to 35 phr of NR.

The term "natural rubber" refers to naturally occurring 1,4 cis polyisoprene polymer such as that can be harvested from sources such as Hevea rubber trees and non-Hevea sources (e.g., guayule shrubs and dandelions such as TKS). The rubber composition comprises a filler. The filler comprises silica. In certain embodiments, the rubber composition comprises from 60 to 120 phr of silica, preferably from 70 to 110, more preferably from 80 to 100.

In certain embodiments at least one silane coupling agent may be used in combination with the silica to improve the dispersibility thereof. In accordance with certain embodiments, the silane coupling agent is present in an amount from 0,01% to 40% by weight of the silica, preferably from 0,01% to 30%, preferably from 0,01% to 25% by weight of the silica, more preferably from 0,01% to 10% by weight of the silica. Generally speaking, any conventional type of silane coupling agent, can be used, such as those having a silicon group and a moiety that can react with a rubber, particularly a vulcanizable rubber. The silane coupling agent acts as a connecting bridge between silica and the rubber. Suitable silane coupling agents include those containing groups such as mercapto, blocked mercapto, polysulfide, amino, vinyl, epoxy, and combinations thereof. Preferably, the silane used in subject invention is Bis[3-(triethoxysilyl)propyl]polysulfide (Si69).

The filler may further comprise any additional filler selected from: carbon black, graphite, graphene, carbon nanotubes, recycled carbon black, clay, titanium dioxide, magnesium dioxide, aluminum oxide, starch, boron nitride, silicon nitride, aluminum nitride, calcium silicate, or silicon carbide or a mixture of those.

The rubber composition further includes a vulcanization system. Herein and after, the term "vulcanization system" refers to those compounds, such as sulfur and the accelerant, which are able to trigger the cross-linking of the polymeric base. Generally, the vulcanization system includes at least one of: a vulcanizing agent, a vulcanizing accelerator, a vulcanizing activator (for example zinc oxide, stearic acid, and the like), a vulcanizing inhibitor, and an anti-scorching agent. The curing package that may be used in the present invention includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Vulcanizing inhibitors and anti-scorching agents are known in the art and can be selected by one skilled in the art based on the vulcanizate properties desired.

Examples of suitable types of vulcanizing agents for use in the rubber coatings, include but are not limited to sulfur or peroxide-based curing components. Examples of specific suitable sulfur vulcanizing agents include soluble sulfur; sulfur donating curing agents, such as an amine disulfide, polymeric polysulfide or sulfur olefin adducts; and

insoluble polymeric sulfur. Vulcanizing agents can be used alone or in combination. Preferably, the sulfur vulcanizing agent is insoluble sulfur or a mixture of soluble and insoluble polymeric sulfur. Generally, the vulcanizing agents are used in an amount ranging from 0,1 to 5 phr, preferably from 1 to 3 phr.

Vulcanizing accelerators are used to control the time and/or temperature required for vulcanization and to improve properties of the vulcanizate. Examples of suitable vulcanizing accelerators for use in the rubber coatings according to the invention include, but are not limited to, thiazole vulcanization accelerators, such as 2-mercaptobenzothiazole, 2,2'-dithiobis(benzothiazole) (MBTS) and the like; sulfonamide vulcanization accelerator, such as N-cyclohexyl-2-benzothiazolesulfenamide (CBS), N-tert-butyl-2-benzothiazole-sulfenamide (TBBS), N,N-Dicyclohexyl -2-benzothiazolesulfenamide (DCBS) and the like; guanidine vulcanization accelerators, such as diphenyl guanidine (DPG) and the like; thiuram vulcanizing accelerators, such as tetrabenzylthiuram disulphide (TBzTD) and the like; carbamate vulcanizing accelerators; Hexamethylene-1,6-bis-Thiosulfate (HTS); and the like. Preferably, the vulcanization accelerators used in this invention are CBS or MBTS or DPG or a mixture of the three. Generally, the amount of the vulcanization accelerators used ranges from 0,1 to 10 phr, preferably 0,5 to 5 phr.

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, the amount of vulcanization activator used ranges from 0,1 to 8 phr, more preferably from 0,5 to 5 phr.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide).Generally, the amount of vulcanization inhibitor is 0,1 to 3 phr, preferably 0,5 to 2 phr.

The rubber composition further comprises a compound having a dipole moment at least higher than 2 Debye, the compound comprising one or more polar functional groups and an hydrophobic carbon chain, wherein the polar functional groups are located only at one end of the carbon chain.

Preferably, the compound has a dipole moment at least higher than 3,5 Debye. It is understood that a dipole occurs in a molecule when there is a unbalanced concentration of opposite charge in the molecular structure. Dipoles arise from differences in electronegativity of the atomic components. This occurs when in the molecular structure one atom is more electronegative than another, resulting in that atom pulling more tightly on the shared pair of electrons and as such separating the positive and negative charge along the molecular structure. Usually the presence of electronegative heteroatoms such as oxygen or nitrogen in a molecule constituted by a skeleton of hydrophobic carbon are responsible for the creation of a dipole. It is understood that the larger is the difference in electronegativity in the atomic component, the larger is the dipole.

The size of a dipole is measured by its dipole moment (p). As such, the dipole moment of a molecule is a measure of the polarity of the molecule and molecules with a permanent dipole moment are called polar molecules.

The dipole moment is calculated by the following formula:

$$\mathbf{p} = \sum_{i=1}^{N} q_i \, \mathbf{r}_i \, .$$

Where N is a number of particles with charges $q_i$ and position vectors $\mathbf{r}_i$, with respect to a reference system. For instance, this collection may be a molecule consisting of electrons, all with charge -e, and nuclei all with charge $eZ_i$, where $Z_i$ is the atomic number of the *i*th nucleus. The dipole observable (p) results from the above formula and is measured in Debye (D).

In a preferred embodiment the compound comprising one or more polar functional groups and an hydrophobic carbon chain, wherein the polar functional groups are located only at one end of the carbon chain.

In a further preferred embodiment said compound comprises at least two or more polar functional groups and an hydrophobic carbon chain, wherein the two or more polar functional groups are located only at one end of the carbon chain.

Herein and after the term " polar functional group" refers to a substituent or moiety that confers a polarity to the molecule and determine the molecule's characteristic chemical reactions and compatibility towards other chemicals. Functional groups are classified as having polar or nonpolar properties depending on their atomic composition and organization. The term polar describes a group which has a specific orientation on the molecule and an electronegativity high enough to determine an unbalanced distribution of electrons and therefore electric charge across the whole molecule.

Examples of polar functional groups are oxygen based polar functional groups, such as hydroxyl group, carbonyl group, carboxyl group, ester group, or nitrogen based polar functional groups such as amide group or amino group.

In a further preferred embodiment said compound comprises at least one or more, preferably two or more,

oxygen based polar functional groups and an hydrophobic carbon chain, wherein the two or more oxygen based polar functional groups are located only at one end of the carbon chain.

In a further preferred embodiment said hydrophobic chain is a linear hydrophobic carbon chain, comprising from 12 to 22 carbon atoms, more preferably from 14 to 20, more preferably from 16 to 18, more preferably 17 carbon atoms.

Herein and after with the term "linear hydrophobic carbon chain" is intended a straight chain, in which the carbon atoms may be completely saturated or may present double bonds along the chain, and wherein the carbon atoms are connected one after the other. Linear carbon chains are distinguished from branched carbon chains wherein the carbon atoms have got carbon substituents (alkyl groups) attached at various points along the chain.

Suitable examples of compounds comprising a linear hydrophobic carbon chain containing from 12 to 22 C atoms and two or more oxygen based polar functional groups located only at one end of the carbon chain may be polyols wherein the two or more hydroxylic groups are located at one end region of the chain, or polyalcoholesters of fatty acids, wherein the terminal hydrocarbon part derived by the alcohol of the ester group comprises two or more hydroxyl groups.

Fatty acid esters (FAEs) are a type of ester that result from the combination of a fatty acid with an alcohol. When the alcohol is a polyalcohol, the terminal hydrocarbon part derived by the alcohol of the ester group will comprise necessarily at least one hydroxyl group.

In a preferred embodiment the compound is an polyalcohol ester of a fatty acid with a linear hydrophobic chain containing from 12 to 22 C, wherein the terminal hydrocarbon part derived by the alcohol of the ester functional group comprises at least two hydroxyl terminal group.

In a preferred embodiment thepolyalcohol component of the FAE isglycerol. When the polyalcohol component of a FAE is glycerol, the fatty acid esters produced can be monoglycerides, comprising a single hydrocarbon chain , diglycerides, comprising two hydrocarbon chain, or triglycerides, comprising three hydrocarbon chain.

In a further preferred embodiment said compound is a monoglyceride of a fatty acid, more particularly a monoglyceride of stearic acid.

In a preferred embodiment the said compound is included in the composition in quantity ranging from 1 to 10 phr, preferably from 1,5 to 8,5 phr, more preferably from 3 to 7 phr, even more preferably from 4 to 6 phr.

According to certain embodiments the rubber composition may further comprise one or more additional ingredients.

The rubber composition may further comprise one or more process oils which may be useful in improving processability by reducing the Mooney viscosity of the rubber composition before curing. In such embodiments, the one or more process oils may be added as a free oil to the rubber composition, as part of the at least one diene-based elastomer (i.e., as an extender oil), or as a combination of both. Non-limiting examples of oils useful in the rubber compositions include paraffinic, naphthenic, aromatic process, and the like. Preferably the oil used in the subject invention is octyl oleate. The rubber composition may comprises 0 (optional) to 30 phr of one or more oils (process, extender, or both), preferably 1 to 25 phr, preferably 1 to 15 phr, more preferably 1 to 10 phr of one or more oils such as those disclosed above.

The rubber composition may further include other conventional rubber additives. These include, for example, anti-degradants such as antioxidants and anti-ozonants.

Anti-degradants are ingredients added to protect the rubber from oxidative attack. Examples of anti-degradants includes phenylenediamines, for example N-(1,3-dimethylbutyl)-N'-phenyl-1,4-benzenediamine (6PPD), trimethyl-dihydroquinolines, for example 2,2,4-Trimethy1-1,2-Dihydroquinoline content (TMQ), phenolics, alkylated diphenylamines (DPAs), paraffinic waxes or microcrystalline waxes or their blends, aromatic phosphites, and diphenylamine-ketone condensates. Suitable amounts of such components can be determined by one skilled in the art.

According to certain embodiments the rubber composition according to the present invention has a ratio of elastic modulus (E') at 30°C to tangent delta (TanD) at 60°C, measured according to ISO standard 4664, at least equal to or greater than 1.15, in order to obtain the desirable balance of the performances stiffness and rolling resistance.

The elastic modulus (E') of a rubber composition is a measure of the resistance to elastic deformation of the rubber under load. Higher values of elastic modulus are associated with a higher stiffness of the rubber composition.

Tangent delta (TanD), or the loss factor, of a rubber composition is a measure of the hysteresis and is the ratio of the loss modulus to the storage modulus which represent the energy dissipation potential of the material. Lower values of TanD at 60°C are associated with an improved rolling resistance of the rubber composition.

According to a preferred embodiment the ratio E'/TanD of the rubber composition ranges from 1.17 to 1.25.

In a second aspect the present invention relates to a tyre tread comprising a rubber composition according to the first aspect.

In a third aspect the present invention relates to a tyre comprising a tread according to the second aspect.

EXAMPLES

The following examples illustrate specific and exemplary embodiments and/or features of the embodiments of the present disclosure. The examples are provided solely for the purposes of illustration and should not be construed as limitations of the present disclosure. Numerous variations over these specific examples are possible without departing from the scope of the present invention. More specifically, the elastomers, and other ingredients (e.g., curative package ingredients, anti-degradants or process oil etc.) utilized in the following examples should not be interpreted as limiting since other or additional ingredients consistent with the disclosure in the detailed description can be utilized in substitution.

A blank composition (Blank), a set of examples according to the invention A (1-2) and two different sets of comparative examples B (1-2) and C (1-2) were prepared. The blank composition does not contain any additive as plasticizer for silica.. Examples A(1-2) according to the invention contain different quantities of glycerol monostearate, according to the following formula:

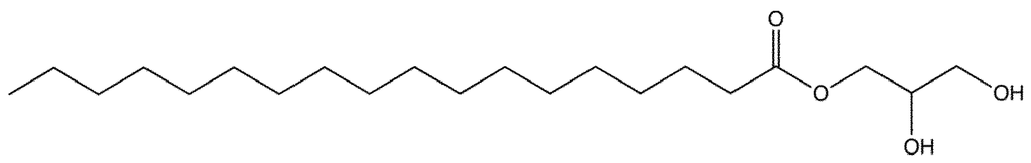

Formula 1

which has a dipole moment of 5 Debye.

Comparison examples B(1-2) contains different quantities of an additive (Additive B) according to the following formula:

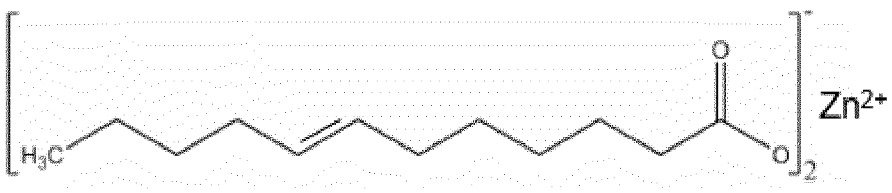

Formula 2

which has a dipole moment of 1,4 Debye.

Comparison examples C(1-2) contains different quantities of an additive (Additive C) which is a branched polyether polyol according to the following formula ( with n equal to 2):

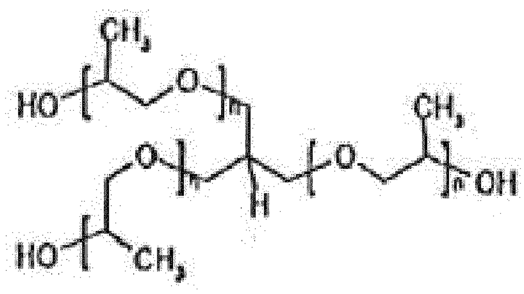

Formula 3

which has a dipole moment of 3,4 Debye and has polar functional groups on each ends of the branched carbon chain.

The dipole moment for Glycerol Monostearate and Additive B was calculated using the computational method "Density Functional Theory" (DFT), by applying the gradient-corrected exchange functional of Becke and the gradient-corrected correlation functional of Lee, Yang, and Parr, commonly referred as BLYP functional, with the method described in "Assessment of Conventional Density Functional Schemes for Computing the Dipole Moment and (Hyper)polarizabilities of Push-Pull π-Conjugated Systems" published in J. Phys. Chem. A 2000, 104, 20, 4755-4763. In particular, the DFT simulations were performed using the OCRA code as described in "The ORCA program system" Wiley interdisciplinary Reviews - Computational Molecular Science, 2012, Vol 2., Issue 1, Pages 73-78.

The rubber compositions of all the examples (blank, invention examples, and comparison examples) were prepared according to the formulations shown in Table 1 and 2, with all ingredients listed in phr.

Table 1

| Example # | Blank | A-1 | A-2 |
|---|---|---|---|
| NR | 30 | 30 | 30 |
| SBR | 70 | 70 | 70 |
| Silica | 90 | 90 | 90 |
| Silane | 6 | 6 | 6 |
| Oil | 2.5 | 2.5 | 2.5 |
| Sulfur | 1.2 | 1.2 | 1.2 |
| DPG | 1.5 | 1.5 | 1.5 |
| MBTS | 0.8 | 0.8 | 0.8 |
| CBS | 1 | 1 | 1 |
| Stearic Acid | 1 | 1 | 1 |
| ZnO | 2 | 2 | 2 |
| TMQ | 0.5 | 0.5 | 0.5 |
| 6PPD | 1.6 | 1.6 | 1.6 |
| Waxes | 2 | 2 | 2 |
| Glycerol Monostearate | - | 2 | 5 |

Table 2

| Example # | B-1 | B-2 | C-1 | C-2 |
|---|---|---|---|---|
| NR | 30 | 30 | 30 | 30 |
| SBR | 70 | 70 | 70 | 70 |
| Silica | 90 | 90 | 90 | 90 |
| Silane | 6 | 6 | 6 | 6 |
| Oil | 2.5 | 2.5 | 2.5 | 2.5 |
| Sulfur | 1.2 | 1.2 | 1.2 | 1.2 |
| DPG | 1.5 | 1.5 | 1.5 | 1.5 |
| MBTS | 0.8 | 0.8 | 0.8 | 0.8 |
| CBS | 1 | 1 | 1 | 1 |
| Stearic Acid | 1 | 1 | 1 | 1 |
| ZnO | 2 | 2 | 2 | 2 |
| TMQ | 0.5 | 0.5 | 0.5 | 0.5 |
| 6PPD | 1.6 | 1.6 | 1.6 | 1.6 |
| Waxes | 2 | 2 | 2 | 2 |
| Additive B | 2 | 5 | -- | -- |

(continued)

| Example # | B-1 | B-2 | C-1 | C-2 |
|---|---|---|---|---|
| Additive C | -- | -- | 2 | 5 |

The SBR used has an average molecular weight of between 300 and 2000 kDa , with a styrene content of between 20 and 40%.

The silica used is marketed under the name ULTRASIL VN3 by the DEGUSSA company.

The silane coupling agent used is a Bis[3-(triethoxysilyl)propyl]polysulfide silane (Si69)

The oil used is Octyl Oleate

DPG is the acronym for the compound diphenyl-guanidine used as a vulcanization accelerant.

MBTS is the acronym for mercaptobenzothiazole disulfide used as a vulcanization accelerant.

CBS is the acronym for the compound N-Cyclohexyl-2-benzothiazolesulfenamide, which is used as a vulcanization accelerant.

(sample preparation)

The rubber compositions of all the examples of table 1 were mixed according to the following mixing procedure: The cross-linkable polymer base and the carbon black were loaded into a mixer with tangential rotors and with an inner volume ranging from 230 to 270 liters before the beginning of the mixing, thus reaching a filling factor ranging from 66 to 72%.

(first mixing step)

The mixer was operated at a speed ranging from 40 to 60 revolutions/minute and the mixture resulting therefrom was removed after having reached a temperature ranging from 140 to 160°C.

(second mixing step)

The mixture obtained from the preceding step was newly processed in a mixer operated at a speed ranging from 40 to 60 revolutions/minute and, subsequently, was removed after having reached a temperature ranging from 130 to 15°C.

(final mixing step)

The vulcanization system (sulphur, accelerators, anti-reversion agents, antioxidants/antiozonants, zinc oxide) was added to the mixture obtained from the preceding step, thus reaching a filling factor ranging from 63 to 67%.

The mixing was operated at a speed ranging from 20 to 40 revolutions/minute and the mixture resulting therefrom was removed after having reached a temperature ranging from 100 to 110°C

Each of the compositions described in Table 1 and Table 2 were vulcanized and the relative vulcanized samples were tested for evaluating the elastic module E'( at 30°C) and TanD (at 60°C), according to ISO standard 4664, which are respectively a measure of the stiffness and for the rolling resistance of the compound.

Table 3 and Table 4 below report the values of elastic moduli E'(30°C) and of TanD (60°C) measured for the samples obtained by above compositions. The values were indexed with respect to composition B-1, containing 2 phr of Additive B, as it represent the common general practice for the application of silica plasticizer in rubber compounding technology. It is understood that a lower value of TanD (60°C) is a desirable property as it represent a lower rolling resistance and an higher value of E'(30°C) is a desirable property as it represent higher stiffness. A desirable ratio E'/TanD is considered to be equal to or higher than 1.15, preferably between 1.17 and 1.25.

Table 3

| Example # | Blank | A-1 | A-2 |
|---|---|---|---|
| E'(30°C) | 112 | 128 | 113 |
| TanD (60°C) | 108 | 104 | 95 |
| E'/TanD | 1.03 | 1.23 | 1.19 |

Table 4

| Example # | B-1 | B-2 | C-1 | C-2 |
|---|---|---|---|---|
| E'(30°C) | 100 | 90 | 117 | 110 |

(continued)

| Example # | B-1 | B-2 | C-1 | C-2 |
|---|---|---|---|---|
| TanD (60°C) | 100 | 87 | 103 | 112 |
| E'/TanD | 1.00 | 1.03 | 1.13 | 0.98 |

From the above data it is clear how the use of an additive according to the invention (additive A) is able to increase the stiffness of the compound and at the same time keep reasonable or even lower values of rolling resistance, providing an E'/TanD ratio above 1.15, therefore providing the optimum balance between the two properties. Differently, the use of additive B, with a lower polarity with respect to glycerol monostearate, provides good rolling resistance but is detrimental for stiffness, providing a E'/TanD ratio close to 1 and the use of additive C, comprising polar groups at each ends of the branched hydrophobic carbon chain, provides an undesirable balance between the two properties as it provides lower stiffness and higher rolling resistance with respect to the glycerol monostearate, providing a E'/TanD ratio below 1.15..

The data confirm that plasticizers having a polarity below certain levels can favor the dispersion of the silica in the polymer matrix by their hydrophobic carbon chain, decreasing the composition viscosity, thus favoring a good hysteresis but inducing a trade off in stiffness.

On the other hand, according to the present invention, plasticizers having a polarity above certain levels and a polar functional group located only at one end of the carbon chain, are able to interact directly and more efficiently with silica by direct bonding, and while still favoring the dispersion through the polymer matrix by the hydrophobic carbon chain and provide a good hysteresis, at the same time are able to guarantee a good stiffness level

## Claims

1. A rubber composition comprising a crosslinkable polymer base, a filler comprising silica and a vulcanization system, **characterized in that** it further comprises a compound having a dipole moment at least higher than 2 Debye, wherein the dipole moment is calculated by DFT simulation, and **in that** the compound comprises one or more polar functional groups and an hydrophobic carbon chain, wherein the polar functional groups are located only at one end of the carbon chain.

2. A rubber composition according to claim 1, **characterized in that** said compound has a dipole moment at least higher than 3,5 Debye.

3. A rubber composition according to any of the previous claims, **characterized in that** said compound comprises at least two or more polar functional groups and an hydrophobic carbon chain, wherein the polar functional groups are located only at one end of the hydrophobic carbon chain.

4. A rubber composition according to any of the previous claims, **characterized in that** the one or more polar functional groups are oxygen based polar functional groups.

5. A rubber composition according to any of the previous claims, **characterized in that** the hydrophobic carbon chain is a linear hydrophobic carbon chain comprising from 12 to 22 C atoms.

6. A rubber composition according to any of the previous claims, **characterized in that** said compound is an polyalcohol ester of a fatty acid with a liner hydrophobic chain containing from 12 to 22 C, wherein the terminal hydrocarbon part derived by the alcohol of the ester functional group comprises at least two hydroxyl terminal group.

7. A rubber composition according to any of the previous claims, **characterized in that** said compound is a glycerol ester of a fatty acid, more particularly a monoglyceride of a fatty acid, more particularly a monoglyceride of stearic acid.

8. A rubber composition according to any of the previous claims, **characterized in that** said compound is added in the composition in a quantity ranging from 1 to 10 phr, preferably from 1,5 to 8,5 phr, more preferably from 3 to 7 phr.

9. A rubber composition according to any of the previous claims, **characterized in that** it comprises from 60 to 120 phr of silica, preferably from 80 to 100 phr of silica.

10. A rubber composition according to any of the previous claims, **characterized in that** said rubber composition further comprises a silane coupling agent.

11. A rubber composition according to any of the previous claims, **characterized in that** the crosslinkable polymer base comprises natural rubber and a copolymer of butadiene, preferably styrene butadiene copolymer (SBR).

12. A rubber composition according to any of the previous claims, **characterized in that** the crosslinkable polymer base comprises from 15 to 45 phr of natural rubber and from 55 to 85 phr of styrene butadiene copolymer, more preferably from 25 to 35 phr of natural rubber and from 65 to 75 phr of styrene butadiene copolymer.

13. A rubber composition according to any of the previous claims, **characterized in that** the ratio of elastic modulus E' at 30°C to tangent delta TanD at 60°C of the composition (E'/TanD), is comprised between 1.17 and 1.25.

14. A tyre tread made by a rubber composition according to any of the previous claims

15. A tyre comprising a tread according to claim 14.

Europäisches Patentamt
European Patent Office
Office européen des brevets

# EUROPEAN SEARCH REPORT

Application Number
EP 22 15 4332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2018/030241 A1 (YONEMOTO MAKIKO [JP] ET AL) 1 February 2018 (2018-02-01)<br>* Comparative Examples 1-7; Notes 7,8,9 (of pages 5 and 6);<br>paragraphs [0040], [0068] - [0070];<br>examples 1-4; tables 1,2 *<br>----- | 1-10,13<br>11,12 | INV.<br>C08K3/36<br>C08K5/103<br>C08L21/00<br>C08L7/00<br>C08L9/06 |
| Y | US 2018/030215 A1 (YONEMOTO MAKIKO [JP]) 1 February 2018 (2018-02-01)<br>* Table 4, Note 21;<br>tables 1-2,4 *<br>----- | 11,12 | |
| X | US 2017/233559 A1 (TSUKISHIMA SHIN [JP] ET AL) 17 August 2017 (2017-08-17)<br>* Notes 25,25',25'',25''',25'''';<br>tables 1,2,3-1,3-2,3-3 *<br>----- | 1-15 | |
| X | US 2017/158842 A1 (TSUKISHIMA SHIN [JP] ET AL) 8 June 2017 (2017-06-08)<br>* Notes 11-12 (page 5), 28-1,28-2,28-3;<br>paragraphs [0028], [0104]; examples 1,2, 16-24; tables 1,2,3 *<br>----- | 1-15 | TECHNICAL FIELDS SEARCHED (IPC) |
| X | US 2015/315358 A1 (YONEMOTO MAKIKO [JP] ET AL) 5 November 2015 (2015-11-05)<br>* paragraph [0119]; examples 1-9; tables 1-7 *<br>----- | 1-15 | C08K<br>C08L |
| X | US 2017/051134 A1 (YAMAGISHI YASUSHI [JP]) 23 February 2017 (2017-02-23)<br>* Comparative Example1-4, Note 7 of Table 1; Note 12 of Table 3.;<br>examples 1-5; tables 1,2,3 *<br>----- | 1-15 | |

The present search report has been drawn up for all claims

1

| Place of search | Date of completion of the search | Examiner |
|---|---|---|
| Munich | 22 July 2022 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 15 4332

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2022

| Patent document cited in search report | Publication date | Patent family member(s) | Publication date |
|---|---|---|---|
| US 2018030241 A1 | 01-02-2018 | BR 112017019059 A2 | 17-04-2018 |
| | | CN 107429007 A | 01-12-2017 |
| | | EP 3266821 A1 | 10-01-2018 |
| | | JP 6608602 B2 | 20-11-2019 |
| | | JP 2016160424 A | 05-09-2016 |
| | | US 2018030241 A1 | 01-02-2018 |
| | | WO 2016139916 A1 | 09-09-2016 |
| US 2018030215 A1 | 01-02-2018 | CN 107406629 A | 28-11-2017 |
| | | EP 3266817 A1 | 10-01-2018 |
| | | JP 6598475 B2 | 30-10-2019 |
| | | JP 2016160423 A | 05-09-2016 |
| | | US 2018030215 A1 | 01-02-2018 |
| | | WO 2016139915 A1 | 09-09-2016 |
| US 2017233559 A1 | 17-08-2017 | CN 106661281 A | 10-05-2017 |
| | | DE 112015003646 T5 | 27-04-2017 |
| | | US 2017233559 A1 | 17-08-2017 |
| | | WO 2016021394 A1 | 11-02-2016 |
| US 2017158842 A1 | 08-06-2017 | CN 106536610 A | 22-03-2017 |
| | | DE 112015003318 T5 | 13-04-2017 |
| | | US 2017158842 A1 | 08-06-2017 |
| | | WO 2016010143 A1 | 21-01-2016 |
| US 2015315358 A1 | 05-11-2015 | BR 112015014267 A2 | 11-07-2017 |
| | | CN 104937023 A | 23-09-2015 |
| | | EP 2937384 A1 | 28-10-2015 |
| | | JP 6113189 B2 | 12-04-2017 |
| | | JP WO2014098155 A1 | 12-01-2017 |
| | | RU 2015129575 A | 25-01-2017 |
| | | US 2015315358 A1 | 05-11-2015 |
| | | WO 2014098155 A1 | 26-06-2014 |
| US 2017051134 A1 | 23-02-2017 | CN 106459499 A | 22-02-2017 |
| | | EP 3138874 A1 | 08-03-2017 |
| | | JP 6484609 B2 | 13-03-2019 |
| | | JP WO2015166997 A1 | 20-04-2017 |
| | | US 2017051134 A1 | 23-02-2017 |
| | | WO 2015166997 A1 | 05-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Assessment of Conventional Density Functional Schemes for Computing the Dipole Moment and (Hyper)polarizabilities of Push-Pull π-Conjugated Systems. *J. Phys. Chem. A,* 2000, vol. 104 (20), 4755-4763
- The ORCA program system. *Wiley interdisciplinary Reviews - Computational Molecular Science,* 2012, vol. 2 (1), 73-78